# EUROPÄISCHE PATENTSCHRIFT

(11) **EP 3 574 559 B1**
(45) Veröffentlichungstag und Bekanntmachung des Hinweises auf die Patenterteilung: **14.12.2022**
(21) Anmeldenummer: 18701731.4
(22) Anmeldetag: 24.01.2018
(51) Int. Cl.: H02G 15/013, H02G 3/22

(54) **KABELDURCHFÜHRUNG MIT ABSCHIRMENDEN UND ABDICHTENDEN EIGENSCHAFTEN**
CABLE BUSHING HAVING SHIELDING AND SEALING PROPERTIES
PASSAGE DE CÂBLES DOTÉ DE PROPRIÉTÉS DE BLINDAGE ET D'ÉTANCHÉITÉ

(30) Priorität: 25.01.2017 DE 102017000654; 02.06.2017 DE 102017209368
(43) Veröffentlichungstag der Anmeldung: 04.12.2019
(73) Patentinhaber: icotek project GmbH & Co. KG, 73569 Eschach (DE)
(72) Erfinder: EHMANN, Bruno, 73563 Mögglingen (DE); EHMANN, Valentin, 73525 Schwäbisch Gmünd (DE)
(74) Vertreter: Dr. Weitzel & Partner
(86) Internationale Anmeldenummer: PCT/EP2018/051643
(87) Internationale Veröffentlichungsnummer: WO 2018/138108

(56) Entgegenhaltungen:
- EP-A2- 0 281 353
- WO-A2-00/68027
- DE-A1-102006 062 609
- DE-U1-202015 106 975
- US-A- 4 692 562
- US-A1- 2009 218 131
- US-A1- 2009 218 132

## Beschreibung

Die Erfindung betrifft eine Kabeldurchführung mit abschirmenden und abdichtenden Eigenschaften nach der im Oberbegriff von Anspruch 1 näher definierten Art.

Gemäß dem allgemeinen Stand der Technik werden für die wasser-/staubdichte Leitungseinführung, beispielsweise in einem Schaltschrank, mit Zugentlastung und zum Schutz vor elektromagnetischen Wellen spezielle EMV-Kabelverschraubungen verwendet. Deren Schraubgehäuse besteht aus einem leitfähigen Material, meist vernickeltem Messing. Die Abdichtung gegen Wasser und Staub funktioniert auf herkömmliche Weise mit einem Dichtring. Für die Umsetzung der elektromagnetischen Abschirmung wird der elektrisch leitende Kabelschirm in einem Bereich des Kabels, in welchem dieses von der äußeren Schicht der Isolierung befreit ist, meist durch mehrere Federblätter kontaktiert, wobei die Hohlräume zwischen den einzelnen Federblättern nicht abgedeckt werden. An diesen Stellen ist der leitfähige Schutzschild somit unterbrochen. Elektromagnetische Wellen können an diesen Stellen eindringen.

Der gattungsgemäße Stand der Technik in Form der DE 103 56 386 B3 beschreibt eine derartige Kabeldurchführung mit einem Doppelnippel aus elektrisch leitfähigem Material sowie einer auf diesen aufschraubbaren Druckschraube mit einer axialen Durchgangsöffnung. Zwischen der Druckschraube und dem Doppelnippel wird dabei ein Dichtelement eingelegt, durch welches das Kabel durch eine Lochung oder einen durchstoßbaren Bereich hindurchgeführt wird. Das Kabel ist im weiteren Verlauf innerhalb des Doppelnippels dann für ein kurzes Stück in axialer Richtung des Kabels abisoliert und in diesem Bereich durch eine Scheibe aus leitfähigem Werkstoff, beispielsweise leitfähigem Kunststoff oder Metall, elektrisch kontaktiert. Anders als die Kontaktierung über die Federblätter gemäß dem oben genannten Stand der Technik wird so eine Kontaktierung geschaffen, welche den gesamten Querschnitt der Kabeldurchführung überdeckt, und so keine Lücken aufweist, durch welche elektromagnetische Wellen eindringen können. Problematisch ist der relativ komplexe Aufbau, welcher eine Abdichtung im Bereich des Dichtelements einerseits und eine zuverlässige Kontaktierung im Bereich des Kabelschirms andererseits notwendig macht. Dies macht den im gattungsmäßen Stand der Technik beschriebenen Aufbau komplex in der Herstellung und der Montage.

Die DE 10 2006 062 609 A1 und die WO 00/68027 A2 zeigen relevanten Stand der Technik.

Ferner kann auf die US/2009/218132 A1 als nächstliegenden Stand der Technik sowie die US 2009/021831 A1 hingewiesen werden.

Zum weiteren Stand der Technik kann auf die DE 20 2015 106 975 U1, die EP 0 281 353 A2 sowie die US 4,692,562 A hingewiesen werden.

Um den zunehmenden Anforderungen in der industriellen Vernetzung von Komponenten bei gleichzeitig steigenden Anforderungen an die elektromagnetische Verträglichkeit (EMV) und damit die Qualität der Abschirmung gerecht zu werden, muss eine einfache und kostengünstigere Lösung gesucht werden. Dies wird durch die Aufbauten gemäß dem Stand der Technik nicht ermöglicht. Die kostengünstige Lösung muss eine Einführung von Leitungen in Kombination mit einem Schutz gegen Staub/Wasser umfassen. Außerdem ist eine Zugentlastung und eine Abschirmung gegen elektromagnetische Wellen notwendig. Um all dies zu erreichen sind gemäß dem Stand der Technik eine Vielzahl einzelner Elemente notwendig. Dies macht die Herstellung und Montage herkömmlicher EMV-Kabelverschraubungen sehr kostspielig und aufwändig, insbesondere auch durch die Notwendigkeit, verschiedene Materialien bei den einzelnen Komponenten verwenden zu müssen.

Die Aufgabe der hier vorliegenden Erfindung besteht nun darin, dieser Problematik abzuhelfen und eine Kabeldurchführung gemäß dem Oberbegriff des Anspruchs 1 anzugeben, welche außerordentlich einfach in der Herstellung und Montage ist, und welche sehr kostengünstig produziert werden kann.

Erfindungsgemäß wird diese Aufgabe durch eine Kabeldurchführung mit den Merkmalen im Anspruch 1 gelöst. Vorteilhafte Ausgestaltungen und Weiterbildungen ergeben sich aus den hiervon abhängigen Unteransprüchen.

Herkömmlich werden der Schutz vor Wasser/Staub und die Abschirmung von elektromagnetischen Wellen voneinander getrennt. Entweder in der eingangs beschriebenen Art und Weise über einen Dichtring aus Elastomer zum Schutz vor Wasser/Staub und zur Zugentlastung sowie Metallfedern zur Umsetzung der elektromagnetischen Abschirmung, in dem der Kabelschirm kontaktiert wird. Im gattungsgemäßen Stand der Technik ist dieser Aufbau im Wesentlichen ebenfalls so enthalten, wobei hier anstelle der Metallfedern ein Element aus einem leitfähigen Werkstoff, beispielsweise einem Kunststoff, ergänzend zu dem Dichtelement eingesetzt wird. Die erfindungsgemäße Lösung kombiniert nun alle gestellten Anforderungen des Schutzes vor Staub/Wasser mit der Zugentlastung und der Abschirmung vor elektromagnetischen Wellen in einer einzigen Komponente, nämlich dem zumindest teilweise elektrisch leitfähigen Aufnahmeelement aus einem Elastomer, zur Durchführung mehrerer Kabel.

In der erfindungsgemäßen Variante des Aufnahmeelements weist dieses lediglich eine Lochung oder eine Durchstoßzone für jedes der angedachten Kabel auf. Durch die Ausbildung des einstückigen zumindest teilweise elektrisch leitfähigen Aufnahmeelements aus Elastomer ist es möglich, die Größe der Durchgangsöffnung für elektromagnetische Wellen deutlich zu verkleinern und somit den Frequenzbereich von elektromagnetischen Wellen, welche durch den Aufbau hindurchdringen können, deutlich einzuschränken. Dabei ist keine Kontaktierung des elektrisch leitfähigen Kabelschirms unterhalb der äußeren Isolierung/Ummantelung des Kabels notwendig. Vielmehr reicht die Verringerung der Durchgangsöffnung, faktisch auf einen Ringspalt in der Dicke der äußeren elektrischen Isolierung des Kabels, aus, um Störungen bis zu einer Frequenz von ca. 10 GHz abzuschirmen. Der Aufbau ist dabei außerordentlich einfach und lässt sich sehr dicht realisieren, insbesondere auch, da das Kabel nicht streckenweise abisoliert werden muss, sodass auch Undichtheiten innerhalb des Kabels selbst, also beispielsweise unter der äußeren Isolierung entlang des elektrisch leitfähigen Kabelschirms, zuverlässig verhindert werden können.

Ein weiterer Vorteil ist es dabei, dass das zumindest teilweise elektrisch leitfähige Aufnahmeelement sich als elastisches Dichtelement an die anliegenden Komponenten anpasst und somit einen idealen Schutzschild gegen elektromagnetische Wellen ausbildet. Auch bei der Verwendung von unterschiedlichen Leitungsdurchmessern der Kabel kann bei demselben Dichtelement eine Anpassung durch das Elastomer an den jeweiligen Leitungsdurchmesser erfolgen. Dies macht das Aufnahmeelement im praktischen Einsatz bei der Montage außerordentlich effizient und flexibel.

Nachteilig bei dieser sehr einfachen Ausführungsvariante ist es dabei, dass Störungen, welche auf der Kabelschirmung selbst vorhanden sind, nicht abgeleitet werden und auf der Kabelschirmung beziehungsweise dem Kabelschirm durch die Kabeldurchführung hindurchlaufen können.

Der Aufbau erfordert eine relativ präzise Anpassung der Lochung beziehungsweise der Durchstoßzone an das zu erwartende Kabel. Dies kann sich in der Praxis ebenfalls als Nachteil herausstellen. Eine weitere sehr vorteilhafte Ausgestaltung dieser Idee sieht es daher vor, dass jeder der Lochungen oder Durchstoßzonen durch zwei in Axialrichtung des Kabels beabstandete Bereiche des Aufnahmeelements mit einem dazwischenliegenden Hohlraum ausgebildet sind. Der Aufbau stellt also faktisch zwei, oder gegebenenfalls auch mehr, hintereinander liegende Membranen aus dem Elastomer dar. Dies erlaubt eine sehr sichere und zuverlässige Abdichtung auf der äußeren Isolierung des. Der Aufbau lässt sich dabei außerordentlich kostengünstig und effizient herstellen und sehr einfach montieren.

Der Hohlraum zwischen den beiden hintereinander liegenden Membranen zur Abdichtung an der äußeren Isolierung des Kabels, also der Kabelummantelung, erhöht die Elastizität des Elastomers konstruktiv nochmal weiter, sodass auch bei sehr unterschiedlichen Durchmessern von Kabeln eine sichere Abdichtung und zuverlässige Abschirmung ebenso erreicht wird, sowie eine Zugentlastung des Kabels durch den Reibschluss zwischen dem Aufnahmeelement und dem äußeren Kabelmantel.

Das Aufnahmeelement kann dabei direkt mit der den Durchbruch aufweisenden Wand in Verbindung stehen. Diese ist normalerweise Teile eines elektrisch leitfähigen Gehäuses um die mit dem Kabel verbundene Elektronik, insbesondere die Wand eines Schaltschranks. Das elastische Aufnahmeelement kann beispielsweise eine außen umlaufende Nut aufweisen, über welche es mit der Wand in der Art verbindbar ist, dass es beim Einbringen in den Druchbruch elastisch verformt wird, so dass nach der Rückkehr in den Ausgangszustand des Aufnahmeelements die Wand um den Durchbruch in der Nut zu liegen kommt. Alternativ dazu ist es auch denkbar, dass gemäß einer vorteilhaften Weiterbildung der Idee ein elektrisch leitfähiger Rahmen oder ein Schraubgehäuse um das einstückige Aufnahmeelement ausgebildet ist. Ein solcher elektrisch leitfähiger Rahmen oder eine Schraubgehäuse, welches in sich wieder mehrteilig ausgebildet sein kann, nimmt dann das Aufnahmeelement dichtend auf. Der Rahmen oder das Schraubgehäuse sind dann mit der Wand um den Durchbruch verbunden, z.B. verschraubt.

Der elektrische leitfähige Rahmen bzw. das elektrisch leitenden Schraubgehäuse kann dabei aus unterschiedlichen Materialien hergestellt sein. So sind einerseits Metalle denkbar, insbesondere jedoch auch elektrisch leitende Kunststoffe, insbesondere mit Fasern verstärkte elektrisch leitende Kunststoffe.

Das zumindest teilweise elektrisch leitfähige Elastomer des Aufnahmeelements ist dabei ein speziell ausgebildetes Elastomer mit elektrischen oder teilweise elektrisch leitenden Eigenschaften oder kann vorzugsweise ein Elastomer mit leitfähigen Additiven sein, um einerseits die Abschirmung und andererseits die Abdichtung und Zugentlastung in dem einen einstückigen Aufnahmeelement zuverlässig realisieren zu können.

Eine weitere außerordentlich vorteilhafte Ausgestaltung sieht es nun ferner vor, dass das Aufnahmeelement mehrere Lochungen aufweist, welche über einen oder mehrere Schlitze mit dem Außenumfang des Aufnahmeelements verbunden sind. Ein solcher Aufbau, bei dem die Lochungen innerhalb des Aufnahmeelements direkt vorgesehen sind, kann es vorsehen, dass die jeweilige Lochung mit einem Schlitz versehen ist, welcher die Lochung oder bei entsprechender Anordnung des Schlitzes gegebenenfalls auch mehrere Lochungen durch einen Schlitz mit dem Außenumfang des Aufnahmeelements verbindet. Für mehrere Lochungen können auch mehrere Schlitze vorgesehen sein. Das Aufnahmeelement lässt sich dann beim Einlegen des Kabels in die jeweilige Lochung entsprechend aufklappen. Dies hat den Vorteil, dass auch konfektionierte Kabel, also Kabel, welche bereits Stecker an ihren Enden tragen, einfach und effizient in das Aufnahmeelement eingelegt werden können, ohne dass eine vorherige Demontage und danach eine erneute Montage der Stecker erfolgen muss. Beim Montieren eines solchen geschlitzten Aufnahmeelements in den Durchbruch oder gemäß der oben beschriebenen vorteilhaften Ausgestaltung in den elektrisch leitfähigen Rahmen oder das Schraubgehäuse und mit diesem an die Wand um den Durchbruch werden die Schlitze in dem Elastomer dann gegeneinander gedrückt und bei ausreichendem Druck dicht verschlossen.

Weitere vorteilhafte Ausgestaltungen der Kabeldurchführung ergeben sich auch aus den Ausführungsbeispielen, welche nachfolgend unter Bezugnahme auf die Figuren in einer nicht erfindungsgemäßen Ausführung mit nur einem Kabel näher beschrieben sind.

Dabei zeigen:
- Figur 1: eine herkömmliche EMV-Kabeldurchführung gemäß dem Stand der Technik;
- Figur 2: eine Kabeldurchführung in einer ersten möglichen Ausführungsform;
- Figur 3: eine Kabeldurchführung in einer zweiten möglichen Ausführungsform; und
- Figur 4: eine Kabeldurchführung in einer dritten möglichen Ausführungsform.

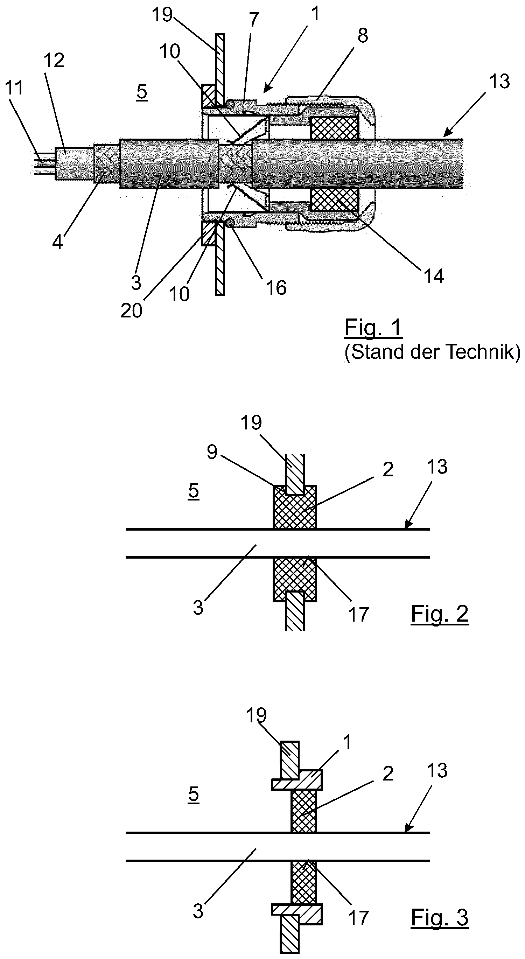

In der Darstellung der Figur 1 ist eine herkömmliche Kabeldurchführung, welche auch als EMV-Kabelverschraubung bezeichnet wird, gemäß dem Stand der Technik zu erkennen. Diese weist ein Schraubgehäuse 1 auf, welches beispielsweise aus einem Doppelnippel 7 und einer Druckschraube 8 besteht.

Zwischen dem Doppelnippel 7 und der Druckschraube 8 ist ein elektrisch leitfähiges Zwischenstück mit Federblättern 10 eingesetzt, welche zur Kontaktierung eines elektrisch leitfähigen Kabelschirms 4 eines Kabels 13 vorgesehen sind. Das Kabel 13 selbst kann, wie es am linken Ende in der Darstellung der Figur 1 zu erkennen ist, aus einer oder mehreren leitfähigen Adern 11 bestehen, welche von einer inneren Isolierung 12 umgeben sind. Diese ist ihrerseits von dem elektrisch leitenden Kabelschirm 4 umgeben, welcher seinerseits von einem Kabelmantel 3 als äußere Isolierung umgeben ist. Neben dieser elektrischen Kontaktierung des Kabelschirms 4 zur Abschirmung ist ein Dichtelement 14 innerhalb der Druckschraube 8 vorgesehen, um den Aufbau gegen Staub/Wasser abzudichten und eine Zugentlastung für das Kabel 13 zu erreichen. Der gesamte Aufbau kann dann über den Doppelnippel 7, beispielsweise über die angedeutete O-Ringdichtung 16, abgedichtet in einem Durchbruch einer Wand 19, beispielsweise der Wand 19 eines elektrisch leitfähigen Gehäuses oder Schaltschranks, eingesetzt und über eine Schraube 20 im Bereich des Doppelnippels 7 klemmend mit der Wand 19 verschraubt werden. Die Kontaktierung über die Federblätter 10 erlaubt dabei nur einen leitfähigen Schutzschild, welcher jedoch über den Umfang mehrfach unterbrochen ist, sodass ein Durchtreten von elektromagnetischen Wellen an diesen Stellen möglich ist.

Die einfachste Ausführungsvariante ist in der Darstellung der Figur 2 skizziert. Ein einteiliges und einstückiges Aufnahmeelement 2 übernimmt die Funktion der Dichtung, Zugentlastung und Abschirmung. Das Aufnahmeelement 2 ist zumindest teilweise elektrisch leitfähig und aus Elastomer ausgebildet und nimmt in einer Lochung 17 das Kabel 13 entlang seines Kabelmantels 3, also der äußeren Isolierung, auf. Das Aufnahmeelement 2 selbst wird zur Montage in den Durchbruch der Wand 19 des Schaltschranks elastisch verformt und nimmt die Wand 19 dann, wenn sie wieder ihre Ausgangsform eingenommen hat in einer umlaufenden Nut 9 auf.

In Figur 3 ist ein vergleichbarer Aufbau zu erkennen. Der einzige Unterschied hier ist, dass das Aufnahmeelement 2 in einem angedeuteten Schaubgehäuse 1 aufgenommen ist, ähnlich wie bei dem Aufbau gemäß dem Stand der Technik in Figur 1.

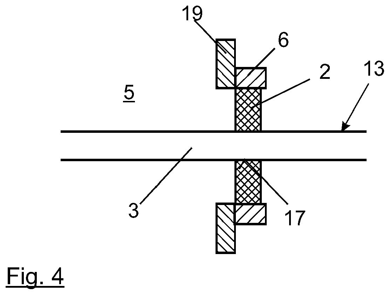

In Figur 4 ist ein weiterer vergleichbarer Aufbau zu erkennen. Der einzige Unterschied hier ist, dass das Aufnahmeelement 2 in einem Rahmen 6 aufgenommen ist. Wenn das Aufnahmeelement den wenigstens annähernd gesamten Durchbruch überdeckt, muss der Rahmen 6 dabei nicht zwingend elektrisch Leitfähig ausgebildet sein, gleichwohl kann er das sein.

In der Kabeldurchführung gemäß den Figuren 2 bis 4 erfolgt keine elektrische Kontaktierung des hier dennoch vorhandenen wenn auch nicht gezeigten Kabelschirms 4 in dem Kabel 13. Vielmehr verlässt man sich darauf, dass elektrisch leitfähige Materialien mit Ausnahme der Ringspalte der Kabelisolierungen über den gesamten Querschnitt vorliegen. Diese Ringspalte sind dabei typischerweise so klein, dass eine Abschirmung bis etwa 10 GHz problemlos möglich ist. Lediglich bei bereits auf dem elektrisch leitfähigen Kabelschirm 4 befindlichen Störungen können hier nicht mit abgeschirmt werden, sondern laufen durch die Kabeldurchführung in dieser Ausgestaltungsvariante gemäß Figur 2 bis 4 hindurch in das angedeutete Innere 5 des Schaltschranks.

Das zumindest teilweise elektrisch leitfähige Elastomer des Aufnahmeelements kann dabei gemäß einer sehr vorteilhaften Weiterbildung der erfindungsgemäßen Idee aus einem prinzipiell leitfähigen Elastomer oder einem Elastomer mit leitfähigen Zusätzen bestehen. Hierdurch wird eine ausreichende Leitfähigkeit für die elektromagnetische Abschirmung erzielt.

Gemäß einer alternativen sehr vorteilhaften Weiterbildung der erfindungsgemäßen Kabeldurchführung kann es auch vorgesehen sein, dass das zumindest teilweise elektrisch leitfähige Elastomer des Aufnahmeelements aus einem elektrisch nicht leitfähigen Elastomer mit einer elektrisch leitfähigen Oberflächenbeschichtung hergestellt ist. Selbstverständlich ließen sich die Aufbauten auch kombinieren, sodass ein elektrisch leitfähiges Elastomer zusätzlich eine leitfähige Oberflächenbeschichtung tragen könnte.

Auch der Rahmen 6 und das Schraubgehäuse 1 können aus einem elektrisch leitfähigen Kunststoff hergestellt oder analog zum Aufnahmeelement mit einer elektrisch leitfähigen Oberflächenbeschichtung versehen sein. Alternativ dazu sind selbstverständlich auch Aufbauten des Schraubgehäuses und des Rahmens aus bisher üblichen Materialien, beispielsweise Metallen wie insbesondere vernickeltem Messing, denkbar.

Die verschiedenen Varianten zur Verbindung der Wand 19 mit dem Aufnahmeelement 2, über die Nut 9, den Rahmen 6 oder das Schraubgehäuse 1 lassen sich dabei selbstverständlich mit jeder Variante des Aufnahmeelements 2 in den Figuren 2 bis 6 beliebig kombinieren.

## Patentansprüche

1. Kabeldurchführung mit abschirmenden und abdichtenden Eigenschaften zur Verbindung mit einer einen Durchbruch aufweisenden Wand (19), mit mehreren Kabeln (13) und mit einem Dichtelement und einem Abschirmelement, in welchen ihrerseits die mehreren Kabel (13) in Lochungen (17) und/oder Durchstoßzonen aufgenommen sind, wobei das Dichtelement und das Abschirmelement als ein einstückig ausgebildetes zumindest teilweise elektrisch leitfähiges Aufnahmeelement (2) für die mehreren Kabel (13) aus einem Elastomer ausgebildet sind, wobei die Lochungen oder Durchstoßzonen jeweils an einer äußeren Isolierung beziehungsweise einem Kabelmantel (3) eines der mehreren Kabel (13) anliegen, wobei sie frei von einer Kontaktierung eines elektrisch leitenden Kabelschirms (4) unter der äußeren Isolierung beziehungsweise dem Kabelmantel (3) der Kabel (13) ausgebildet sind.

2. Kabeldurchführung nach Anspruch 1, **dadurch gekennzeichnet, dass** das einstückig ausgebildete zumindest teilweise elektrisch leitfähige Aufnahmeelement (2) aus einem Elastomer ausgebildet ist, welches durch Additive eine elektrische Leitfähigkeit aufweist.

3. Kabeldurchführung nach Anspruch 1, **dadurch gekennzeichnet, dass** das einstückig ausgebildete zumindest teilweise elektrisch leitfähige Aufnahmeelement (2) aus einem Elastomer ausgebildet ist, welches eine elektrisch leitfähige Oberflächenbeschichtung aufweist.

4. Kabeldurchführung nach einem der Ansprüche 1 bis 3, **dadurch gekennzeichnet, dass** jeder der Lochungen oder jede der Durchstoßzonen durch zwei in Axialrichtung des Kabels (13) beabstandete Bereiche des Aufnahmeelements (2) mit einem dazwischenliegenden Hohlraum ausgebildet sind.

5. Kabeldurchführung nach einem der Ansprüche 1 bis 4, **dadurch gekennzeichnet, dass** das Aufnahmeelement (2) in einem elektrisch leitenden Schraubgehäuse (1) oder Rahmen (6) aufgenommen ist, welcher zur elektrisch leitenden Verbindung mit der Wand (19) um den Durchbruch ausgebildet ist.

6. Kabeldurchführung nach Anspruch 5, **dadurch gekennzeichnet, dass** der elektrisch leitfähige Rahmen (6) oder das elektrisch leitfähige Schraubgehäuse (1) aus einem elektrisch leitfähigen Kunststoff ausgebildet ist.

7. Kabeldurchführung nach einem der Ansprüche 1 bis 6, **dadurch gekennzeichnet, dass** das Aufnahmeelement (2) mehrere Lochungen (17) aufweist, welche über einen oder mehrere Schlitze mit dem Außenumfang des Aufnahmeelements (2) verbunden sind.

8. Kabeldurchführung nach einem der Ansprüche 1 bis 7, **dadurch gekennzeichnet, dass** das Aufnahmeelement (2) entlang seines äußeren Umfangs eine umlaufende Nut (9) aufweist.

## Claims

1. Cable bushing with shielding and sealing properties for connecting to a wall (19) having a breakthrough, having a plurality of cables (13) and having a sealing element and a shielding element, in which in turn the plurality of cables (13) are accommodated in perforations (17) and/or penetration zones, wherein the sealing element and the shielding element are formed as an integrally formed, at least partially electrically conductive receiving element (2) for the plurality of cables (13) made of an elastomer, wherein the perforations or penetration zones each abut an outer insulation or a cable sheath (3) of one of the plurality of cables (13), wherein they are formed free of contacting an electrically conductive cable shield (4) under the outer insulation or the cable sheath (3) of the cables (13).

2. Cable bushing according to claim 1, **characterized in that** the integrally formed, at least partially electrically conductive receiving element (2) is formed from an elastomer which has electrical conductivity due to additives.

3. Cable bushing according to claim 1, **characterized in that** the integrally formed, at least partially electrically conductive receiving element (2) is formed from an elastomer which has an electrically conductive surface coating.

4. Cable bushing according to one of claims 1 to 3, **characterized in that** each of the perforations or each of the penetration zones is formed by two regions of the receiving element (2) spaced apart in the axial direction of the cable (13) with a cavity lying therebetween.

5. Cable bushing according to one of claims 1 to 4, **characterized in that** the receiving element (2) is accommodated in an electrically conductive screw housing (1) or frame (6) which is designed for electrically conductive connection to the wall (19) around the breakthrough.

6. Cable bushing according to claim 5, **characterized in that** the electrically conductive frame (6) or the electrically conductive screw housing (1) is formed from an electrically conductive plastic.

7. Cable bushing according to one of claims 1 to 6, **characterized in that** the receiving element (2) has a plurality of perforations (17) which are connected to the outer circumference of the receiving element (2) via one or more slots.

8. Cable bushing according to one of claims 1 to 7, **characterized in that** the receiving element (2) has a circumferential groove (9) along its outer circumference.

## Revendications

1. Passage de câbles doté de propriétés de blindage et d'étanchéité destiné à être relié avec une paroi (19) présentant un trou de passage avec plusieurs câbles (13) et comportant un élément d'étanchéité et un élément de blindage, dans lesquels les plusieurs câbles (13) sont logés de leur côté dans des perforations (17) et/ou des zones de perforation, l'élément d'étanchéité et l'élément de blindage étant réalisés sous la forme d'un élément de réception (2) au moins partiellement conducteur d'électricité en une seule pièce pour les plusieurs câbles (13) en un élastomère, les perforations ou les zones de perforation s'appliquant respectivement contre une isolation extérieure ou une gaine de câble (3) de l'un des plusieurs câbles (13), étant réalisées sans contact avec un blindage de câble (4) électroconducteur sous l'isolation extérieure ou la gaine de câble (3) des câbles (13).

2. Passage de câbles selon la revendication 1, **caractérisé en ce que** l'élément de réception (2) au moins partiellement électroconducteur, réalisé d'une seule pièce, est formé d'un élastomère qui présente une conductivité électrique grâce à des additifs.

3. Passage de câbles selon la revendication 1, **caractérisé en ce que** l'élément de réception (2) au moins partiellement électroconducteur, réalisé d'une seule pièce, est formé d'un élastomère qui présente un revêtement de surface électroconducteur.

4. Passage de câbles selon l'une quelconque des revendications 1 à 3, **caractérisé en ce que** chacune des perforations ou chacune des zones de perforation est formée par deux parties de l'élément de réception (2) espacées dans la direction axiale du câble (13), avec un espace creux entre elles.

5. Passage de câbles selon l'une quelconque des revendications 1 à 4, **caractérisé en ce que** l'élément de réception (2) est logé dans un boîtier à vis (1) ou un cadre (6) électroconducteur, qui est conçu pour la liaison électroconductrice avec la paroi (19) autour du passage.

6. Passage de câbles selon la revendication 5, **caractérisé en ce que** le cadre (6) électroconducteur ou le boîtier à vis (1) électroconducteur est réalisé en une matière plastique électroconductrice.

7. Passage de câbles selon l'une quelconque des revendications 1 à 6, **caractérisé en ce que** l'élément de réception (2) présente plusieurs perforations (17) qui sont reliées à la périphérie extérieure de l'élément de réception (2) par une ou plusieurs fentes.

8. Passage de câbles selon l'une quelconque des revendications 1 à 7, **caractérisé en ce que** l'élément de réception (2) présente une rainure périphérique (9) le long de sa périphérie extérieure.
